# EUROPÄISCHE PATENTSCHRIFT

(11) **EP 1 808 584 B1**
(45) Veröffentlichungstag und Bekanntmachung des Hinweises auf die Patenterteilung: **04.11.2009**
(21) Anmeldenummer: 06127197.9
(22) Anmeldetag: 27.12.2006
(51) Int. Cl.: F01N 7/18, F01N 3/28, C22B 7/00, B23D 21/00

(54) **Verfahren und Vorrichtung zum Entfernen eines Körpers aus einem Gehäuse**
Method and device for removing a body from a can
Procédé et dispositif pour extraire un corps d'une boîte

(30) Priorität: 16.01.2006 DE 102006002182
(43) Veröffentlichungstag der Anmeldung: 18.07.2007
(73) Patentinhaber: J. Eberspächer GmbH & Co. KG, 73730 Esslingen (DE)
(72) Erfinder: Hübschen, Jürgen, 66687, Wadern (DE); Schneider, Franz, 66346, Püttlingen (DE); Schwindling, Stefan, 55427, Kell (DE); Müller, Bernd, 57350, Spicheren (FR)
(74) Vertreter: Bongen, Renaud & Partner

(56) Entgegenhaltungen:
- DE-A1- 4 303 925
- DE-A1- 10 040 715
- DE-A1- 19 920 868
- GB-A- 1 096 745

## Beschreibung

Die vorliegende Erfindung betrifft ein Verfahren zum Entnehmen wenigstens eines Abgasbehandlungskörpers aus einem Gehäuse, mit den Merkmalen des Oberbegriffs des Anspruchs 1. Die Erfindung betrifft außerdem eine Vorrichtung zum Freischneiden wenigstens eines in einem Gehäuse angeordneten Abgasbehandlungskörpers.

Abgasbehandlungseinrichtungen, die wie z.B. Katalysatoren und Partikelfilter, weisen in einem Gehäuse, das in der Regel aus Stahlblech hergestellt ist, einen oder mehrere Abgasbehandlungskörper auf, die beispielsweise aus einem keramischen Werkstoff und vorzugsweise als Monolith ausgestaltet sind. Üblicherweise ist der jeweilige Abgasbehandlungskörper in einem Mantel des Gehäuses axial fixiert, vorzugsweise mit Hilfe einer Lagermatte, die den jeweiligen Abgasbehandlungskörper in Umfangsrichtung umhüllt und die radial zwischen dem Abgasbehandlungskörper und dem Mantel verpresst ist. Durch diese Verpressung des Lagermaterials entsteht eine starke axiale Fixierung für den jeweiligen Abgasbehandlungskörper im Mantel. Zusätzlich kann das Gehäuse an axialen Enden des Mantels mit Endabschnitten versehen sein, die beispielsweise einen trichterförmigen Einlauf und einen trichterförmigen Auslauf für die Abgasströmung bilden.

Aus unterschiedlichen Gründen kann es erforderlich sein, den wenigstens einen Abgasbehandlungskörper aus dem Gehäuse zu entnehmen, beispielsweise zur Werkstofftrennung beim Recycling oder wenn eine Wiederverwendungen der entnommen Abgasbehandlungskörper beabsichtigt ist. Letzteres ist insbesondere dann der Fall, wenn während der Herstellung der Abgasbehandlungseinrichtung gehäuseseitig Fehler auftreten, welchen die Verwendbarkeit der Abgasbehandlungseinrichtung in Frage stellen. Da die Abgasbehandlungskörper regelmäßig die teuersten Komponenten der Abgasbehandlungseinrichtungen darstellen, besteht ein gewisses Interesse daran, diese so aus dem Gehäuse herauszunehmen, dass sie anschließend möglichst unmittelbar wieder in ein anderes Gehäuse eingesetzt werden können. Hierzu ist es erforderlich, den jeweiligen Abgasbehandlungskörper so aus dem Gehäuse zu entnehmen, dass er dabei weder beschädigt noch verschmutzt wird.

Aus der DE 199 20 868 A1 ist ein Verfahren zum Entnehmen eines Abgasbehandlungskörpers aus einem Gehäuse bekannt, bei dem ein den Abgasbehandlungskörper in Umfangsrichtung umschließender Mantel von einem axialen Mantelende zum anderen axialen Mantelende geöffnet wird und bei dem nach dem Öffnen des Mantels der wenigstens eine Abgasbehandlungskörper aus dem geöffneten Mantel entnommen wird. Beim bekannten Verfahren wird der Mantel dadurch geöffnet, dass er aufgesägt wird. Dabei fallen Späne an, wodurch es zu einer unerwünschten Verschmutzung des Abgasbehandlungskörpers kommen kann.

Die vorliegende Erfindung beschäftigt sich mit dem Problem, einen vorteilhaften Weg zum Entfernen wenigstens eines Abgasbehandlungskörpers aus einem Gehäuse aufzuzeigen, der sich insbesondere durch eine reduzierte Verschmutzungs- und Beschädigungsgefahr für den jeweiligen Abgasbehandlungskörper auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Mantel des Gehäuses von einem axialen Mantelende zum anderen axialen Mantelende mechanisch und spanlos aufzuschneiden. Aus dem aufgeschnittenen Mantel kann dann der jeweilige Abgasbehandlungskörper entnommen werden. Das spanlose und mechanische Aufschneiden zeichnet sich dadurch aus, dass dabei keine Verunreinigungen entstehen, die sich am jeweiligen Abgasbehandlungskörper ablagern könnten. Insbesondere entstehen keine Späne, wie sie z.B. beim Sägen oder Fräsen auftreten, und auch keine Funken, wie sie z.B. beim Trennschweißen der Trennschleifen auftreten. Ebenso wenig kommt es beim mechanischen Schneiden zu einer Staubentwicklung. Da somit beim mechanischen Schneiden keine Verunreinigungen entstehen, ist auch die Gefahr einer Verschmutzung oder Beschädigung der Abgasbehandlungskörper reduziert. Des Weiteren lässt sich der jeweilige Abgasbehandlungskörper aus dem aufgeschnittenen Mantel in der Regel so herausnehmen, dass dabei keine großen Kräfte auf den jeweiligen Abgasbehandlungskörper eingeleitet werden müssen. Dementsprechend kann auch diesbezüglich die Beschädigungsgefahr reduziert werden, was insbesondere dann von Bedeutung ist, wenn die Abgasbehandlungskörper aus einem spröden Material bestehen, wie z.B. Keramik, insbesondere Cordierit.

Das erfindungsgemäße Verfahren charakterisiert sich außerdem dadurch, dass das spanlose und mechanische Aufschneiden des Mantels mit wenigstens einer Klinge erfolgt. Darüber hinaus wird vor dem Aufschneiden des Mantels zumindest ein axialer Endabschnitt des Gehäuses vom Mantel mit wenigstens einem Rollmesser spanlos und mechanisch abgeschnitten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, prinzipielle Ansicht einer Vorrichtung zum Freischneiden eines Abgasbehandlungskörpers beim Abschneiden eines ersten Endabschnitts des Gehäuses,
- Fig. 2: eine Ansicht wie in Fig. 1, jedoch beim Abschneiden eines zweiten Endabschnitts des Gehäuses,
- Fig. 3: eine Ansicht wie in Fig. 2, jedoch vor dem Aufschneiden eines Mantels des Gehäuses,
- Fig. 4: eine Ansicht wie in Fig. 3, jedoch nach dem Aufschneiden des Mantels,
- Fig. 5: einen vereinfachten Querschnitt durch das Gehäuse im Bereich des Mantels vor dem Aufschneiden des Mantels entsprechend Schnittlinien V in Fig. 1,
- Fig. 6: ein Querschnitt wie in Fig. 5, jedoch nach dem Aufschneiden des Mantels entsprechend Schnittlinien VI in Fig. 4,
- Fig. 7: ein Querschnitt wie in Fig. 6, jedoch nach dem Aufbiegen des Mantels,
- Fig. 8: ein Querschnitt wie in Fig. 6, jedoch bei einer Ausführungsform mit zwei gegenüberliegenden Schnitten,
- Fig. 9: eine Ansicht wie in Fig. 8, jedoch beim Entfernen freigeschnittener Gehäusehälften.

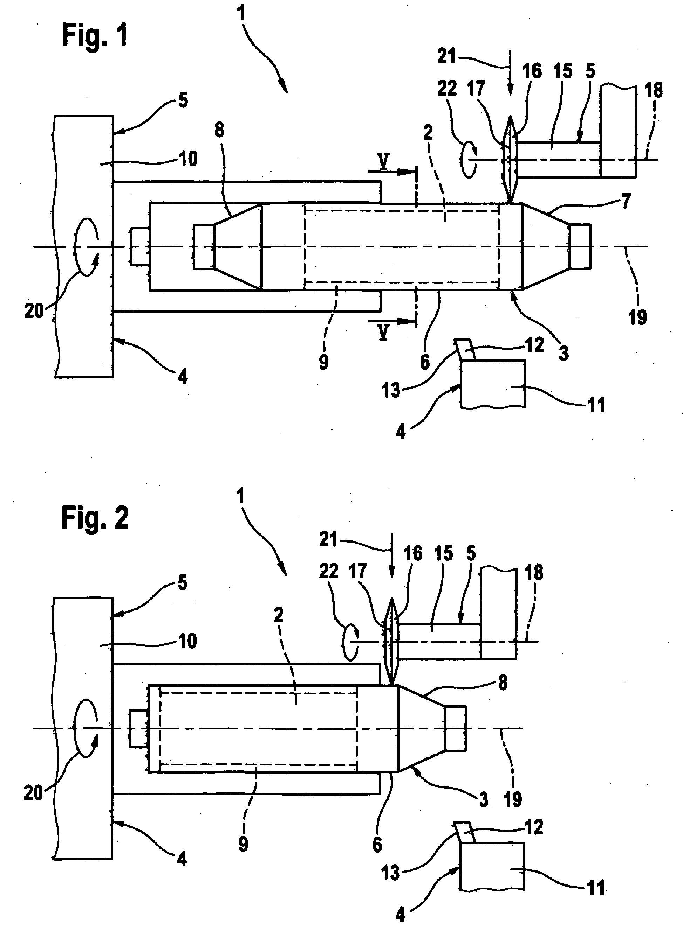

Entsprechend den Fig. 1 bis 4 umfasst eine erfindungsgemäße Vorrichtung 1, die zum Freischneiden wenigstens eines Abgasbehandlungskörpers 2 dient, der in einem Gehäuse 3 einer nicht näher bezeichneten Abgasbehandlungseinrichtung angeordnet ist, zumindest eine Aufschneidstation 4. In der dargestellten bevorzugten Ausführungsform umfasst die Vorrichtung 1 außerdem eine Abschneidstation 5.

Bei der Abgasbehandlungseinrichtung kann es beispielsweise um einen Katalysator oder um ein Partikelfilter handeln. Dementsprechend handelt es sich bei dem wenigstens einen Abgasbehandlungskörper 2 vorzugsweise um einen Katalysatorkörper oder um einen Partikelfilterkörper. Zur vereinfachten Darstellung ist im Gehäuse 3 hier nur ein einziger Abgasbehandlungskörper 2 angeordnet. Es ist klar, dass bei anderen Ausführungsformen auch mehrere Abgasbehandlungskörper 2 im Gehäuse 3 angeordnet sein können. Der Abgasbehandlungskörper 2 kann beispielsweise aus einem keramischen Material bestehen. Insbesondere handelt es sich beim Abgasbehandlungskörper 2 um einen Monolithen. Ebenso kann der Abgasbehandlungskörper 2 aus mehreren monolithischen Teilkörpern zusammengebaut sein.

Das Gehäuse 3 weist einen Mantel 6 auf, der den Abgasbehandlungskörper 2 in Umfangsrichtung umschließt. Desweiteren weist das Gehäuse 3 vorzugsweise zwei axiale Endabschnitte 7 und 8 auf, die an den axialen Enden des Mantels 6 angeordnet sind. Insbesondere sind die Endabschnitte 7, 8 an den Mantel 6 angeschweißt oder daran durch Umformung ausgebildet. Das Gehäuse 3 ist hier in der sogenannten Rohrbauweise gefertigt und besitzt demnach einen einstückigen, rohrförmigen Mantel 6. Grundsätzlich ist die vorliegende Erfindung auch bei einem Gehäuse 3 anwendbar, das in der sogenannten Halbschalenbauweise gefertigt ist, bei welcher der Mantel 6 aus zwei Halbschalen zusammengebaut ist. Im vorliegenden Fall sind die Endabschnitte 7, 8 als Trichter ausgestaltet; ebenso sind andere Ausführungsformen möglich. Üblicherweise besitzt der Mantel 6 und somit auch der Abgasbehandlungskörper 2 einen kreisförmigen oder elliptischen Querschnitt; ebenso sind andere Querschnitte möglich. Mantel 6 und Endabschnitte 7, 8 bestehen üblicherweise aus Metall, in der Regel Stahlblech, vorzugsweise Edelstahlblech.

Der Abgasbehandlungskörper 2 ist im Inneren des Mantels 6 vorzugsweise von einem Lagermaterial 9 in Umfangsrichtung umhüllt. Das Lagermaterial 9 ist beispielsweise in Form einer Lagermatte einlagig oder mehrlagig um den Abgasbehandlungskörper 2 gewickelt und mit diesem in den Mantel 6 eingesetzt. Im fertig montierten Zustand ist das Lagermaterial 9 radial zwischen dem Mantel 6 und dem Abgasbehandlungskörper 2 angeordnet und radial verpresst. Hierdurch wird eine Verspannung erzielt, die den Abgasbehandlungskörper 2 im Mantel 6 axial fixiert und außerdem vor einem unmittelbaren Kontakt mit dem Mantel 6 schützt.

Die Aufschneidstation 4 und die Abschneidstation 5 weisen jeweils eine Halteeinrichtung 10 auf, mit deren Hilfe das Gehäuse 3 fixierbar ist. Im gezeigten Ausführungsbeispiel ist beiden Stationen 4, 5 eine gemeinsame Halteinrichtung 10 zugeordnet. Bei einer anderen Ausführungsform kann jede Station 4, 5 eine eigene Halteeinrichtung 10 aufweisen, wodurch die Taktzeiten zum Freischneiden des Abgasbehandlungskörpers 2 verkleinert werden und wodurch die separaten Halteeinrichtungen 10 besser an ihre jeweilige Aufgabe angepasst werden können.

Die Aufschneidstation 4 weist außerdem zumindest ein Aufschneidwerkzeug 11 auf, mit dessen Hilfe der Mantel 6 spanlos und mechanisch aufgeschnitten werden kann. Hierzu ist das Aufschneidwerkzeug 11 vorzugsweise mit einer Klinge 12 ausgestattet, deren Schneide hier mit 13 bezeichnet ist. Es ist klar, dass bei einer anderen Ausführungsform auch zwei oder mehr derartige Aufschneidwerkzeuge 11 vorhanden sein können.

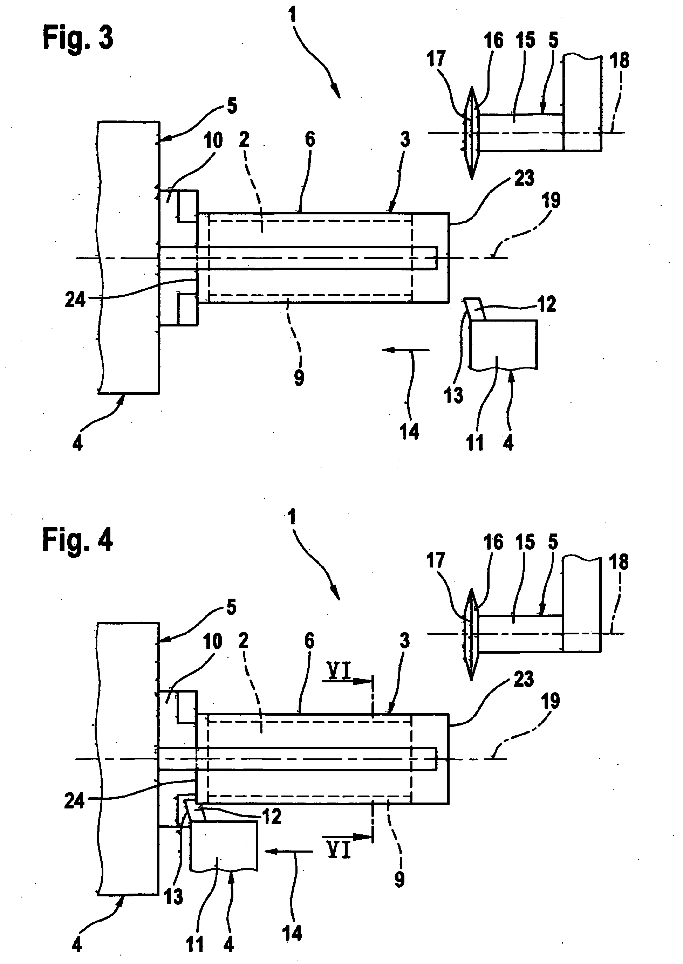

Die Aufschneidstation 4 ist so ausgestaltet, dass sie zwischen der Halteeinrichtung 10 und dem Aufschneidwerkzeug 11 eine axiale Relativverstellung ermöglicht, die in den Fig. 3 und 4 durch einen Pfeil 14 angedeutet ist. Im Beispiel ist das Aufschneidwerkzeug 11 relativ zur stationären Halteeinrichtung 10 verfahrbar; ebenso ist ein stationäres Aufschneidwerkzeug 11 denkbar.

Die Abschneidstation 5 weist wenigstens ein Abschneidwerkzeug 15, mit dessen Hilfe die Endabschnitte 7, 8 vom Mantel 6 bzw. vom Gehäuse 3 spanlos und mechanisch abschneidbar sind. Hierzu ist das Abschneidwerkzeug 15 vorzugsweise mit einem Rollmesser 16 ausgestattet, dessen Schneide mit 17 bezeichnet ist. Das Rollmesser 16 ist um eine Rollachse 18 drehbar am Abschneidwerkzeug 15 gelagert. Es ist klar, dass bei einer anderen Ausführungsform auch zwei oder mehr derartiger Abschneidwerkzeuge 15 vorgesehen sein können.

Die Abschneidstation 5 ist vorzugsweise so ausgestaltet, dass sie zwischen der Halteinrichtung 10 und dem Abschneidwerkzeug 15 eine in der Umfangsrichtung des Gehäuses 3 bzw. des Mantels 6 orientierte Relativverstellung ermöglicht. Diese Relativverstellung wird im gezeigten Beispiel dadurch erreicht, dass die Halteeinrichtung 10 das damit festgehaltene Gehäuse 3 um eine Drehachse 19 drehen kann, was in den Fig. 1 und 2 durch einen Pfeil 20 angedeutet ist, während das Abschneidwerkzeug 15 stationär ist. Ebenso ist ein rotierendes Abschneidwerkzeug 15 denkbar.

Die erfindungsgemäße Vorrichtung 1 bzw. das erfindungsgemäße Verfahren arbeitet wie folgt:

Entsprechend Fig. 1 wird das Gehäuse 3 in die Halteeinrichtung 10 eingesetzt und darin festgehalten. Das Abschneidwerkzeug 15 wird zum Abschneiden des freistehenden ersten Endabschnitts 7 positioniert. Das Rollmesser 16 berührt dabei mit seiner Schneide 17 den Mantel 6 radial und ist dabei so orientiert, dass sich seine Rollachse 18 parallel zur Drehachse 19 der Halteinrichtung 10 erstreckt. Die Halteeinrichtung 10 dreht dann das Gehäuse 3 um die Drehachse 19. Gleichzeitig wird das Rollmesser 16 entsprechend einem Pfeil 21 radial an den Mantel 6 angepresst. Desweiteren rollt das Rollmesser 16 außen am Gehäuse 3 bzw. außen am Mantel 6 ab. Beim Abrollen dreht das Rollmesser 16 um seine Rollachse 18, was in den Fig. 1 und 2 durch Pfeil 22 angedeutet ist. Aufgrund des Anpressdrucks 21 schneidet dabei das Rollmesser 16 zunehmend in das Gehäuse 3 bzw. in den Mantel 6 ein, solange bis der Mantel 6 durchtrennt ist, wodurch das Rollmesser 16 den ersten Endabschnitt 7 vom Mantel 6 abschneidet. Die Abschneidstation 5 kann dabei den jeweiligen Endabschnitt 7 bzw. 8 spanlos vom Mantel 6 abschneiden. Auch andere Verunreinigen, wie Funken oder Staub, treten bei diesem Abschneidvorgang regelmäßig nicht auf.

Entsprechend Fig. 2 wird in einem nächsten Schritt der zweite Endabschnitt 8 vom Gehäuse 3 bzw. vom Mantel 6 abgeschnitten. Hierzu wird zunächst das restliche Gehäuse 3 aus der Halteeinrichtung 10 entnommen, gewendet und erneut darin fixiert. Anschließend wird das Abschneidwerkzeug 15 zum Abschneiden des zweiten Endabschnitts 18 am restlichen Gehäuse 3 bzw. am Mantel 6 positioniert. Der spanlose Abschneidvorgang ist dann identisch wie beim Abschneiden des ersten Endabschnitts 7.

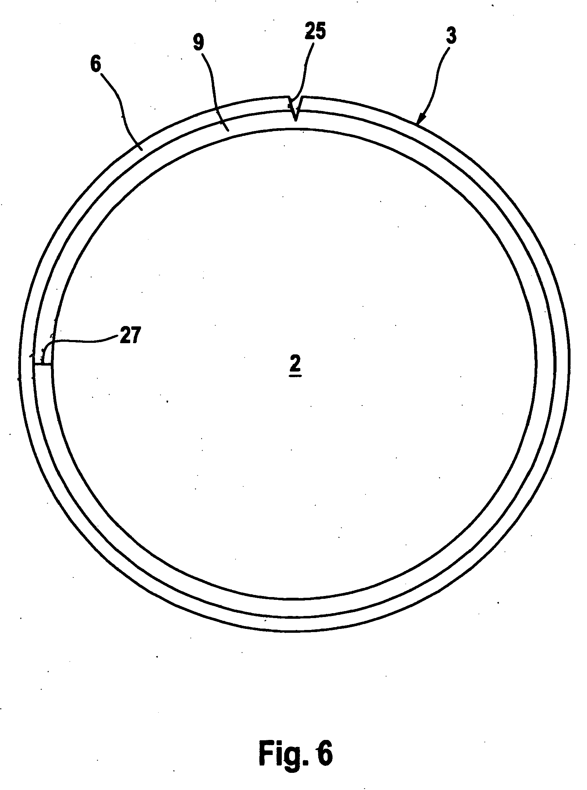

Anschließend ist entsprechend Fig. 3 vom Gehäuse 3 nur noch der Mantel 5 übrig, der im folgenden mit Hilfe des Aufschneidwerkzeugs 11 aufgeschnitten wird. Hierzu wird das Aufschneidwerkzeug 11 relativ zur Halteeinrichtung 10 so positioniert, dass sich die Klinge 12 mit ihrer Schneide 13 axial benachbart zu einem ersten axialen Mantelende 23 befindet. Dabei erstreckt sich die Klinge 12 mit ihrer vorzugsweise angestellten Schneide 13 in radialer Richtung soweit, dass sie in jedem Fall den Mantel 6 durchsetzt und in das Lagermaterial 9 einschneiden kann und keinenfalls den Abgasbehandlungskörper 2 berührt. Die Halteeinrichtung 10 ist so gestaltet, dass das Aufschneidwerkzeug 11 die Klinge 12 wenigstens an einer Seite zumindest über die gesamte axiale Erstreckung des Mantels 6 durch den Mantel 6 durchführen kann. Der Mantel 6 wird dabei vom ersten axialen Mantelende 23 bis zum anderen oder zweiten axialen Mantelende 24 aufgeschnitten, und zwar spanlos und mechanisch. Vorzugsweise erfolgt die Relativverstellung 14 des Aufschneidwerkzeugs 11 axial und somit parallel zur Drehachse 19. Hierdurch entsteht ein geradliniger Schnitt, der in Fig. 6 mit 25 bezeichnet ist.

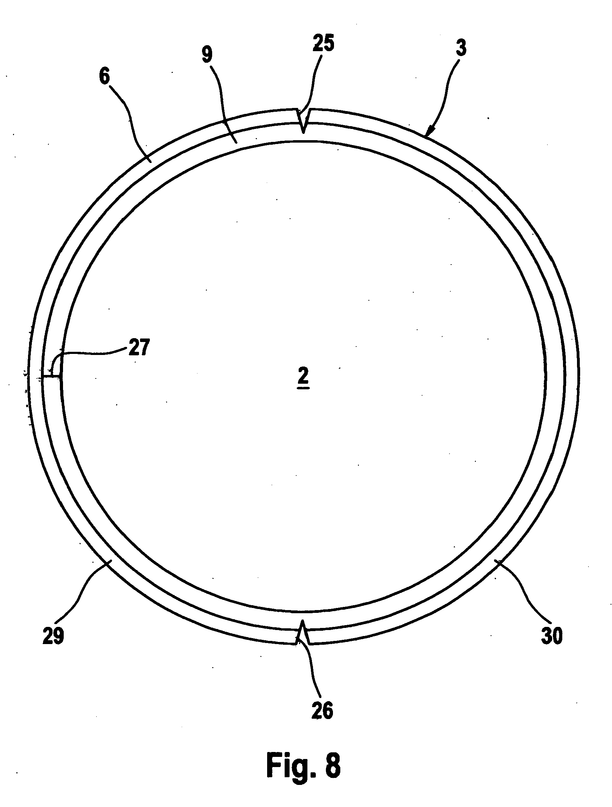

Entsprechend Fig. 4 wird der Mantel 6 vom ersten Mantelende 23 bis zum zweiten Mantelende 24 durchgehend aufgeschnitten, wodurch der genannte Schnitt 25 entsteht. Durch Zurückverstellen des Aufschneidwerkzeugs 11 in die in Fig. 3 gezeigte Position und durch Drehen des Mantels 6, z.B. um 180° um die Drehachse 19 kann auf entsprechende Weise zu dem bereits hergestellten ersten Schnitt 25 ein zweiter Schnitt hergestellt werden, der in Fig. 8 mit 26 bezeichnet ist. Ebenso ist es möglich, die beiden Schnitte 25, 26 mit zwei Abschneidwerkzeugen 11 simultan herzustellen. Auch das Aufschneiden des Mantels 6 erfolgt spanlos und mechanisch, wodurch eine Verschmutzung sowie eine Beschädigung des Abgasbehandlungskörpers 2 vermieden werden kann.

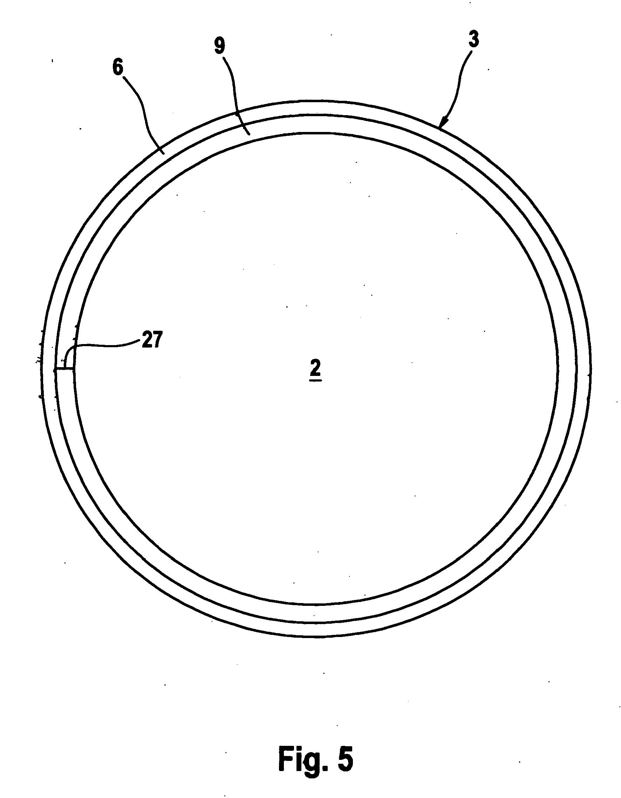

Fig. 5 zeigt das Gehäuse 3 nach dem Abschneiden der Endabschnitte 7, 8 und vor dem Aufschneiden des Mantels 6. Dies entspricht dem in Fig. 3 gezeigten Zustand.

Das den Abgasbehandlungskörper 2 in Umfangsrichtung umhüllende Lagermaterial 9 ist hier als einlagige Lagermatte ausgestaltet, deren Ende bei 27 aneinander stoßen. Insbesondere bei einer neuen Abgasbehandlungseinrichtung ist das Lagermaterial 9 radial stark vorgespannt, so dass es nicht ohne weiteres möglich ist, den Abgasbehandlungskörper 2 ohne Beschädigungsgefahr in axialer Richtung aus dem Mantel 6 herauszuschieben. Dementsprechend wird bei der Erfindung der Mantel 6 in axialer Richtung aufgeschnitten.

Fig. 6 zeigt den Zustand des Gehäuses 3 nach dem Einbringen des ersten Schnitts 25 in den Mantel 6. Erkennbar erstreckt sich dieser Schnitt 25 in radialer Richtung durch den Mantel 6 vollständig hindurch und erstreckt sich bis in das Lagermaterial 9 hinein. In jedem Fall wird ein radialer Abstand zum Abgasbehandlungskörper 2 eingehalten.

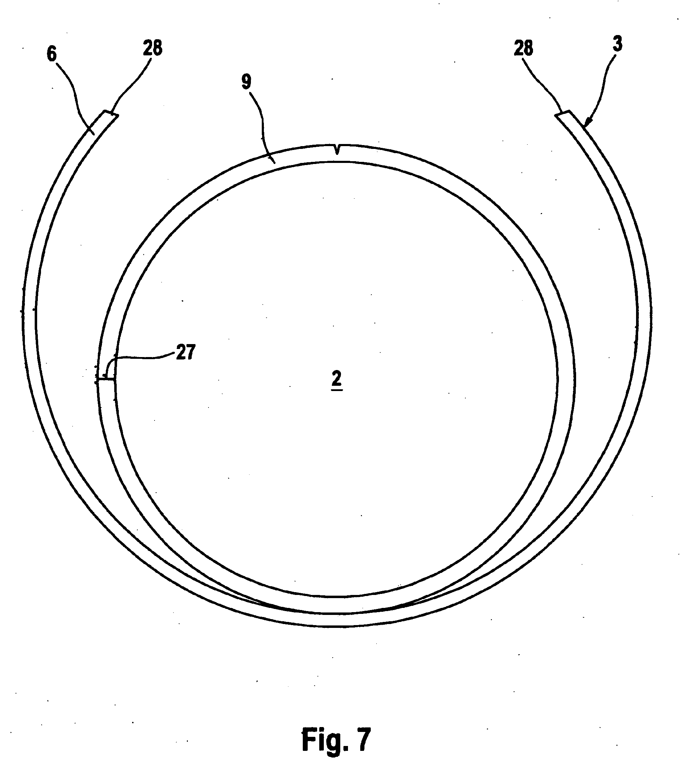

Bei einer relativ kleinen Wandstärke des Mantels 6 kann ein einziger Schnitt 25 ausreichen, um den Abgasbehandlungskörper 2 vom Gehäuse 3 bzw. vom Mantel 6 freizuschneiden. Entsprechend Fig. 7 kann dann nämlich der aufgeschnittene Mantel 6 vor dem Entnehmen des Abgasbehandlungskörpers 2 aufgebogen werden. Hierbei vergrößert sich ein nicht näher bezeichneter Abstand zwischen Mantelkanten 28, die sich entlang des Schnitts 25 erstrecken. Nach dem Aufbiegen des Mantels 6 lässt sich der Abgasbehandlungskörper 2 zusammen mit dem Lagermaterial 9 dem restlichen Gehäuse 3 bzw. dem Mantel 6 entnehmen. Das Lagermaterial 9 kann dann ohne weiteres vom Abgasbehandlungskörper 2 abgenommen werden.

Bei einer alternativen Vorgehensweise, die sich bei größeren Wandstärken des Mantels 6 anbietet, kann der Mantel 6 entsprechend Fig. 8 wie oben erwähnt zumindest an zwei Seiten aufgeschnitten werden, wodurch wenigstens die beiden Schnitte 25, 26 entstehen, die sich vorzugsweise diametral gegenüberliegen. Durch die wenigstens zwei Schnitte 25, 26 wird der Mantel 6 in zwei oder mehr Mantelsegmente 29, 30 aufgeteilt.

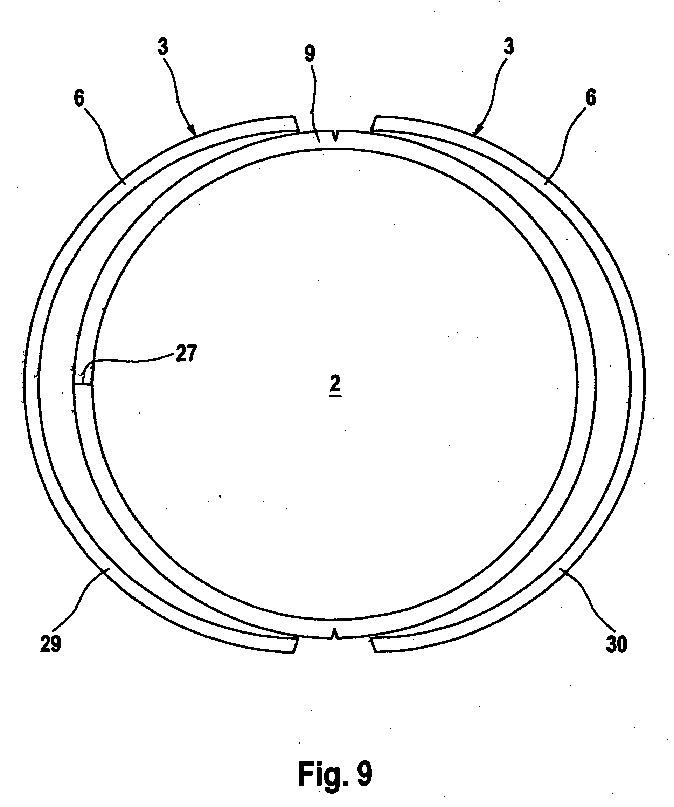

Bei zwei diametralen Schnitten 25, 26 können entsprechend Fig. 9 die beiden freigeschnittenen Mantelsegmente oder Mantelhälften 29, 30 vom Abgasbehandlungskörper 2 entfernt werden. Damit ist der Abgasbehandlungskörper 2 aus dem Gehäuse 3 bzw. dem Mantel 6 entnommen.

## Patentansprüche

1. Verfahren zum Entnehmen wenigstens eines Abgasbehandlungskörpers (2) aus einem Gehäuse (3), das einen den wenigstens einen Abgasbehandlungskörper (2) in Umfangsrichtung umschließenden Mantel (6) aufweist,
- bei dem der Mantel (6) von einem axialen Mantelende (23) zum anderen axialen Mantelende (24) geöffnet wird,
- bei dem nach dem Öffnen des Mantels (6) der wenigstens eine Abgasbehandlungskörper (2) aus dem geöffneten Mantel (6) entnommen wird,
**dadurch gekennzeichnet,**
- **dass** der Mantel (6) spanlos und mechanisch aufgeschnitten wird,
- **dass** der Mantel (6) mit wenigstens einer Klinge (12) geschnitten wird,
- **dass** vor dem Aufschneiden des Mantels (6) zumindest ein axialer Endabschnitt (7, 8) des Gehäuses (3) vom Mantel (6) spanlos und mechanisch abgeschnitten wird,
- **dass** der wenigstens eine Endabschnitt (7, 8) mit wenigstens einem Rollmesser (16) vom Mantel (6) abgeschnitten wird.

2. Verfahren nach Anspruch 1,
**dadurch gekennzeichnet,**
**dass** das Aufschneiden des Mantels (6) mit zumindest einem Aufschneidwerkzeug (11) durchgeführt wird, das beim Aufschneiden den Mantel (6) radial durchsetzt und dabei relativ zum Mantel (6) axial verstellt wird.

3. Verfahren nach Anspruch 1 oder 2,
**dadurch gekennzeichnet,**
- **dass** der Mantel (6) nur mit einem einzigen Schnitt (25) aufgeschnitten wird, wobei der aufgeschnittene Mantel (6) vor dem Entnehmen des wenigstens einen Abgasbehandlungskörpers (2) aufgebogen wird, indem ein Abstand zwischen entlang des Schnitts (25) aneinandergrenzenden Mantelkanten (28) vergrößert wird, oder
- **dass** der Mantel (6) mit mindestens zwei in Umfangsrichtung voneinander beabstandeten Schnitten (25, 26) aufgeschnitten wird, wodurch mindestens zwei Mantelsegmente (29, 30) entstehen, wobei zum Entnehmen des wenigstens einen Abgasbehandlungskörpers (2) aus dem aufgeschnittenen Mantel (6) zumindest eines der Mantelsegmente (29, 30) vom wenigstens einen Abgasbehandlungskörper (2) entfernt wird, wobei die Schnitte (25, 26) insbesondere gleichzeitig oder nacheinander am Mantel (6) eingebracht werden können.

4. Verfahren nach einem der Ansprüche 1 bis 3,
**dadurch gekennzeichnet,**
- **dass** beim Aufschneiden des Mantels (6) eine axiale Relativverstellung (14) zwischen dem Mantel (6) und der wenigstens einen Klinge (12) erfolgt, und/oder
- **dass** die wenigstens eine Klinge (12) beim Aufschneiden des Mantels (6) in ein Lagermaterial (9) einschneidet, das den wenigstens einen Abgasbehandlungskörper (2) innerhalb des Mantels (6) in Umfangsrichtung umhüllt.

5. Verfahren nach einem der Ansprüche 1 bis 4,
**dadurch gekennzeichnet,**
**dass** beim Aufschneiden des Mantels (6) gleichzeitig ein Lagermaterial (9), das den wenigstens einen Abgasbehandlungskörper (2) innerhalb des Mantels (6) in Umfangsrichtung umhüllt, aufgeschnitten oder eingeschnitten wird.

6. Verfahren nach einem der Ansprüche 1 bis 5,
**dadurch gekennzeichnet,**
- **dass** beim Abschneiden des wenigstens einen Endabschnitts (7, 8) eine in Umfangsrichtung orientierte Relativverstellung (20) zwischen dem Mantel (6) und dem wenigstens einen Rollmesser (15) erfolgt, und/oder
- **dass** das wenigstens eine Rollmesser (16) beim Abschneiden des wenigstens einen Endabschnittes (7, 8) am Gehäuse (3) abrollt, und/oder
- **dass** das wenigstens eine Rollmesser (16) beim Abschneiden des wenigstens eine Endabschnitts (7, 8) am Gehäuse (3) unter radialem Anpressdruck (21) abrollt.

7. Abgasbehandlungskörperfreischneidvorrichtung zum Freischneiden wenigstens eines in einem Gehäuse (3) angeordnete Abgasbehandlungskörpers (2),
- mit einer Aufschneidstation (4), die eine Halteeinrichtung (10) zum Festhalten des Gehäuses (3) und wenigstens ein Aufschneidwerkzeug (11) zum spanlosen und mechanischen Aufschneiden eines den wenigstens einen Abgasbehandlungskörper (2) in Umfangsrichtung umschließenden Mantels (6) des.Gehäuses (3) aufweist,
- wobei die Aufschneidstation (4) zum Aufschneiden des Mantels (6) eine axiale Relativverstellung (14) zwischen der Halteeinrichtung (10) und dem wenigstens einen Aufschneidwerkzeug (11) ermöglicht, derart, dass das wenigstens eine Aufschneidwerkzeug (11) den Mantel (6) von einem axialen Mantelende (23) zum anderen axialen Mantelende (24) aufschneidet,
- wobei das wenigstens eine Aufschneidwerkzeug (11) jeweils eine Klinge (12) aufweist, die bei der axialen Relativverstellung (14) den Mantel (6) radial durchsetzt und ihn vom einen Mantelende (23) zum anderen Mantelende (24) aufschneidet,
- wobei eine Abschneidstation (5) vorgesehen ist, die eine Halteinrichtung (10) zum Festhalten des Gehäuses (3) und wenigstens ein Abschneidwerkzeug (15) zum spanlosen und mechanischen Abschneiden wenigstens eines axialen Endabschnitts (7, 8) des Gehäuses (3) aufweist,
- wobei die Abschneidstation (5) zum Abschneiden des wenigstens einen Endabschnitts (7, 8) eine in Umfangsrichtung orientierte Relativverstellung (20) zwischen der Halteeinrichtung (10) und dem wenigstens einen Abschneidwerkzeug (15) ermöglicht, derart, dass der wenigstens eine Endabschnitt (7, 8) vom Mantel (6) abgeschnitten wird,
- wobei das wenigstens eine Abschneidwerkzeug (15) jeweils ein Rollmesser (16) aufweist, das bei der in Umfangsrichtung orientierten Relativverstellung (20) außen am Gehäuse (3) unter radialem Anpressdruck (21) abrollt und dabei zunehmend in das Gehäuse (3) einschneidet und letztlich den jeweiligen Endabschnitt (7, 8) vom Mantel (6) abschneidet.

## Claims

1. A method for removing at least one exhaust-gas treatment body (2) from a housing (3) that has a jacket (6) that encloses the at least one exhaust-gas treatment body (2) in the circumferential direction,
- in which method the jacket (6) is opened from one axial jacket end (23) to the other axial jacket end (24),
- in which method, subsequent to the opening of the jacket (6), the at least one exhaust-gas treatment body (2) is removed from the opened jacket (6),
**characterised in that**
- the jacket (6) is non-cuttingly and mechanically cut open,
- the jacket (6) is cut with at least one blade (12),
- prior to the cutting open of the jacket (6), at least one axial end section (7, 8) of the housing (3) is non-cuttingly and mechanically cut off from the jacket (6),
- the at least one end section (7, 8) is cut off from the jacket (6) with at least one circular blade (16).

2. The method as specified in claim 1,
**characterised in that**
the cutting open of the jacket (6) is carried out with at least one cutting-open tool (11) that, upon the cutting open, radially penetrates the jacket (6) and so is moved axially relative to the jacket (6).

3. The method as specified in claim 1 or claim 2,
**characterised in that**
- the jacket (6) is cut open with only one single cut (25), the cut-open jacket (6) is bent prior to the removal of the at least one exhaust-gas treatment body (2) **in that** a distance is increased between the cut (25) of jacket edges (28) that are adjacent one another, or
- the jacket (6) is cut open with at least two cuts (25, 26) that are distanced from one another in the circumferential direction, by means of which at least two jacket segments (29, 30) result, wherein in order to remove the at least one exhaust-gas treatment body (2) from the cut open jacket (6), at least one of the jacket segments (29, 30) is removed from at least one exhaust-gas treatment body (2), wherein the cuts (25, 26) can be introduced in the jacket (6) at the same time or one after the other.

4. The method as specified in any one of the claims 1 to 3,
**characterised in that**
- upon the cutting open the jacket (6), an axial relative movement (14) results between the jacket (6) and the at least one blade (12), and/or
- the at least one blade (12) cuts into a bearing material (9) on cutting open the jacket (6), said bearing material enclosing the at least one exhaust-gas treatment body (2) in the circumferential direction inside the jacket (6).

5. The method as specified in any one of the claims 1 to 4,
**characterised in that**
upon the cutting open the jacket (6), a bearing material (9), which encloses the at least one exhaust-gas treatment body (2) in the circumferential direction inside the jacket (6), is cut open or cut into at the same time.

6. The method as specified in any one of the claims 1 to 5,
**characterised in that**
- upon the cutting open of the at least one end section (7, 8), a relative movement (20), oriented in the circumferential direction, results between the jacket (6) and the at least one circular blade (15), and/or
- the at least one circular blade (16) rolls off upon cutting off the at least one end section (7, 8) on the housing (3), and/or
- the at least one circular blade (16) rolls off under radial contact pressure upon cutting off the at least one end section (7, 8) on the housing (3).

7. A cutting-free-of-an-exhaust-gas-treatment-body cutting device for cutting free at least one exhaust-gas treatment body (2) arranged in a housing (3),
- having a cutting-open station (4) that has a holding device (10) for holding the housing (3) and at least one cutting-open tool (11) for non-cuttingly and mechanically cutting open one of the jackets (6), which encloses the at least one exhaust-gas treatment body (2) in the circumferential direction, of the housing (3),
- wherein the cutting-open station (4) makes possible, in the cutting open of the jacket (6), an axial relative movement (14) between the holding device (10) and the at least one cutting-open tool (11) in such a manner that the at least one cutting-open tool (11) cuts open the jacket (6) from one axial jacket end (23) to the other axial jacket end (24),
- wherein the at least one cutting-open tool (11) respectively has one blade (12) that, with the axial relative movement (14), radially penetrates the jacket (6) and cuts it open from one jacket end (23) to the other jacket end (24),
- wherein a cutting-off station (5) is provided that has a holding device (10) for holding the housing (3) and at least one cutting-off tool (15) for non-cuttingly and mechanically cutting off at least one axial end section (7, 8) of the housing (3),
- wherein the cutting-off station (5) makes possible, in the cutting off of the at least one end section (7, 8), a relative movement (20) directed in the circumferential direction between the holding device (10) and the at least one cutting-off tool (15) in such a manner that the at least one end section (7, 8) of the jacket (6) is cut off,
- wherein the at least one cutting-off tool (15) respectively has a circular blade (16) that, in the relative motion (20) oriented in the circumferential direction, rolls off under radial contact pressure (21) externally on the housing and, in so doing, increasingly cuts into the housing (3) and, finally, cuts off the respective end section (7, 8) of the jacket (6).

## Revendications

1. Procédé pour prélever au moins un corps de traitement de gaz d'échappement (2) hors d'un logement (3), qui présente une gaine (6) enveloppant le au moins un corps de traitement de gaz d'échappement (2) dans la direction circonférentielle,
- dans lequel la gaine (6) est ouverte d'une extrémité de gaine axiale (23) vers l'autre extrémité de gaine axiale (24),
- dans lequel après l'ouverture de la gaine (6), le au moins un corps de traitement de gaz d'échappement (2) est prélevé hors de la gaine (6) ouverte,
**caractérisé en ce que**
- la gaine (6) est tranchée mécaniquement et sans enlèvement de copeaux,
- la gaine (6) est découpée avec au moins une lame (12),
- avant le tranchage de la gaine (6), au moins une portion d'extrémité axiale (7,8) du logement (3) est rognée mécaniquement et sans enlèvement de copeaux de la gaine (6),
- au moins une portion d'extrémité (7,8) est rognée de la gaine (6) avec au moins un cutter rotatif (16).

2. Procédé selon la revendication 1,
**caractérisé en ce que**
le tranchage de la gaine (6) est effectué avec au moins un outil de tranchage (11), qui traverse radialement la gaine (6) lors du tranchage et est ainsi déplacé axialement par rapport à la gaine (6).

3. Procédé selon la revendication 1 ou 2,
**caractérisé en ce que**
- la gaine (6) est tranchée seulement avec une découpe (25) unique, dans lequel la gaine (6) tranchée est gauchie avant le prélèvement d'au moins un corps de traitement de gaz d'échappement (2), en agrandissant un espacement entre des arêtes de gaine (28) attenantes le long de la découpe (25),
- la gaine (6) est tranchée avec au moins deux découpes (25,26) espacées l'une de l'autre dans la direction circonférentielle, moyennant quoi au moins deux segments de gaine (29,30) sont générés, dans lequel à des fins de prélèvement d'au moins un corps de traitement de gaz d'échappement (2) hors de la gaine (6) tranchée, au moins un des segments de gaine (29,30) est retiré du au moins un corps de traitement de gaz d'échappement, dans lequel les découpes (25,26) peuvent être ménagées sur la gaine (6) notamment simultanément ou consécutivement.

4. Procédé selon une des revendications 1 à 3,
**caractérisé en ce que**
- lors du tranchage de la gaine (6), un déplacement relatif (14) axial entre la gaine (6) et la au moins une lame (12) a lieu, et/ou
- au moins une lame (12) cisaille lors du tranchage de la gaine (6) dans un matériau de palier (9), qui enveloppe le au moins un corps de traitement de gaz d'échappement (2) à l'intérieur de la gaine (6) dans la direction circonférentielle.

5. Procédé selon une des revendications 1 à 4,
**caractérisé en ce que**
lors du tranchage de la gaine (6), un matériau de palier (9), qui enveloppe au moins un corps de traitement de gaz d'échappement (2) à l'intérieur de la gaine (6) dans la direction circonférentielle, est simultanément tranché ou cisaillé.

6. Procédé selon une des revendications 1 à 5,
**caractérisé en ce que**
- lors du rognage d'au moins une portion d'extrémité (7,8), un déplacement relatif (20) orienté dans la direction circonférentielle entre la gaine (6) et le au moins un cutter rotatif (15) a lieu, et/ou
- le au moins un cutter rotatif (16) roule sur le logement (3) lors du rognage d'au moins une portion d'extrémité (7,8), et/ou
- au moins un cutter rotatif (16)roule lors du rognage d'au moins une portion d'extrémité (7,8) sur le logement (3) sur une pression de pressage (21) radiale.

7. Dispositif de dégagement par découpe d'un corps de traitement de gaz d'échappement afin de dégager par découpage au moins un corps de traitement de gaz d'échappement (2) disposé dans un logement (3),
- comportant un poste de tranchage (4), qui présente un dispositif de maintien (10) pour immobiliser le logement (3) et au moins un outil de tranchage (11) à des fins de tranchage mécanique et sans enlèvement de copeaux d'une gaine (6) du logement (3) enveloppant dans la direction circonférentielle le au moins un corps de traitement de gaz d'échappement (2),
- dans lequel le poste de tranchage (4) permet à des fins de tranchage de la gaine (6) un déplacement relatif axial (14) entre le dispositif de maintien (10) et le au moins un outil de tranchage (11), de telle sorte que le au moins un outil de tranchage (11) tranche la gaine (6) d'une extrémité de gaine axiale (23) vers l'autre extrémité de gaine axiale (24),
- dans lequel le au moins un outil de tranchage (11) présente respectivement une lame (12), laquelle lors du déplacement relatif axial (14) traverse radialement la gaine (6) et la tranche d'une extrémité de gaine (23) vers l'autre extrémité de gaine (24),
- dans lequel un poste de rognage (5) est prévu, lequel présente un dispositif de maintien (10) pour immobiliser le logement (3) et au moins un outil de rognage (15) à des fins de rognage mécanique et sans enlèvement de copeaux d'au moins une portion d'extrémité axiale (7,8) du logement (3),
- dans lequel le poste de rognage (5) permet à des fins de rognage d'au moins une portion d'extrémité (7,8) un déplacement relatif (20) orienté dans la direction circonférentielle entre le dispositif de maintien (10) et le au moins un outil de rognage (15), de telle sorte que la au moins une portion d'extrémité (7,8) soit rognée de la gaine (6),
- dans lequel le au moins un outil de rognage (15) présente respectivement un cutter rotatif (16), qui roule lors du déplacement relatif (20) orienté dans la direction circonférentielle à l'extérieur sur le logement (3) sous une pression de pressage (21) radiale et cisaille ainsi de manière croissante le logement (3) et finalement rogne la portion d'extrémité (7,8) respective de la gaine (6).
